# EUROPÄISCHE PATENTANMELDUNG

(11) **EP 4 527 725 A1**
(43) Veröffentlichungstag der Anmeldung: **26.03.2025**
(21) Anmeldenummer: 24201440.5
(22) Anmeldetag: 19.09.2024
(51) Int. Cl.: B62K 21/14

(54) **LENKERVORBAU MIT EINER VORBAUFEDERUNG FÜR EIN FAHRRAD**

(30) Priorität: 22.09.2023 DE 102023125800
(71) Anmelder: Jörn GmbH, 71336 Waiblingen (DE); Fiegl, Thomas, 63467 Mühltal (DE); Pohl, Achim, 64342 Seeheim-Jugenheim (DE)
(72) Erfinder: Uhlig, Thomas, 73262 Reichenbach/Fils (DE); Dauth, Gregor, 64287 Darmstadt, de (DE)
(74) Vertreter: Liebl, Thomas

(57) **Zusammenfassung**

Die Erfindung betrifft einen Lenkervorbau (1) mit einer Vorbaufederung für ein Fahrrad, wobei der im montierten Zustand mit einem Gabelschaft (8) verbundene und in Fahrtrichtung nach vorne abragende Vorbau (1) ein gabelschaftseitiges Vorbauteil (2) und ein lenkerseitiges Vorbauteil (3) aufweist, an dem ein Lenker (6) befestigbar ist, wobei das gabelschaftseitige Vorbauteil (2) und das lenkerseitige Vorbauteil (3) mittels eines Schwenklagers mit in Querrichtung liegender Schwenkachse schwenkbar verbunden sind, Das Schwenklager ist durch eine Elastomer-Metall-Buchse (11) als Drehfeder (4) gebildet, wobei die Elastomer-Metall-Buchse (11) verdrehfest in ein zylindrisches Aufnahmeauge (9) eingepresst ist, und wobei das Aufnahmeauge (9) integraler Bestandteil des gabelschaftseitigen Vorbauteils (2) ist. Das lenkerseitige Vorbauteil (3) weist ein Gabelteil (20) auf, das mit zwei Gabelschenkeln die Elastomer-Metall-Buchse (11) umgreift, wobei das Außenrohr (13) zumindest eine randseitige Ausnehmung (14) als Ausnehmungssegment aufweist und zumindest an einem Wangenteil (15) eine der Ausnehmung (14) zugeordnete und in diese mit einem Freigang eingreifende Anschlagnase (16) angeordnet ist, für eine Federwegbegrenzung der Drehfeder (4).

## Beschreibung

Die Erfindung betrifft einen Lenkervorbau mit einer Vorbaufederung für ein Fahrrad.

Der Vorbau einer Lenkervorrichtung eines Fahrrads ist ein Bauteil, das mit einem Gabelschaft verbunden ist und in Fahrtrichtung nach vorne abragt und an dem ein Lenker befestigt ist.

Um den Komfort des Radfahrens, insbesondere bei vertikalen Fahrbahn angeregten Stoßbelastungen auf den Lenker zu erhöhen, sind Federungssysteme für Vorbauten in unterschiedlichen Ausführungen bekannt. Eine Vorbaufederung als Parallelogramm-Dämpfer ist beispielsweise aus WO 94/18057 A1 bekannt. Ein Nachteil dieser Vorbaufederung ist die aufwändige Ausführung mit vielen Bauteilen, insbesondere mit Spiralfedern und ein erforderlicher Wartungsaufwand.

Weiter ist ein gattungsgemäßer Lenkervorbau mit einer Vorbaufederung für ein Fahrrad bekannt (US 2020/0017160 A1), wobei der im montierten Zustand mit einem Gabelschaft verbundene und in Fahrtrichtung nach vorne abragende Vorbau ein gabelschaftseitiges Vorbauteil und ein lenkerseitiges Vorbauteil aufweist, an dem ein Lenker befestigbar ist. Das gabelschaftseitige Vorbauteil und das lenkerseitige Vorbauteil sind mittels eines Schwenklagers mit in Querrichtung liegender Schwenkachse schwenkbar verbunden, wobei das Schwenklager ein Innenrohr und ein Außenrohr mit dazwischen liegender Elastomerschicht aufweist.

Die Elastomerschicht ist hier als halbschalenförmiges Elastomerelement ausgebildet, durch das eine federdämpfende rückstellende Funktion erreicht wird. Der Dämpfungsgrad ist hier mittels einer Stellschraube einstellbar, wodurch insbesondere ein vielteiliger, relativ komplexer Aufbau des Schwenklagers bedingt ist.

Weiter sind Elastomer-Metall-Buchsen als Gelenklager aus der Fahrzeugtechnik bekannt, beispielsweise zur Befestigung eines Fahrgestellt-Hilfsrahmens (DE-OS 2337872) oder zur Federaugenlagerung (DE 40 42 201 C1) oder als Fahrerauslager (DE 10 2011 016 673 A1).

Aufgabe der Erfindung ist es demgegenüber einen gattungsgemäßen Lenkervorbau mit einer Vorbaufederung für ein Fahrrad so weiter zu bilden, dass bei hohem Fahrkomfort trotz der Vorbaufederung das Fahrverhalten stabil und sicher bleibt und der Lenkervorbau mit der Vorbaufederung wartungsfrei und kostengünstig herstellbar ist und sich gewichtsgünstig harmonisch in das Erscheinungsbild eines Fahrrads einfügt.

Diese Aufgabe wird mit den Merkmalen des Anspruchs 1 gelöst. Vorteilhafte Weiterbildungen sind Gegenstand der Unteransprüche.

Gemäß Anspruch 1 ist ein Lenkervorbau mit einer Vorbaufederung für ein Fahrrad vorgesehen, wobei der Lenkervorbau, der im montierten Zustand mit einem Gabelschaft verbunden ist und in Fahrtrichtung nach vorne abragt, ein gabelschaftseitiges Vorbauteil und ein lenkerseitiges Vorbauteil aufweist, an dem ein Lenker befestigbar ist. Das gabelschaftseitige Vorbauteil und das lenkerseitige Vorbauteil sind mittels eines Schwenklagers mit in Querrichtung liegender Schwenkachse schwenkbar verbunden. Erfindungsgemäß ist das Schwenklager durch eine Elastomer-Metall-Buchse gebildet, die eine Drehfeder ausbildet und ein Innenteil, vorzugsweise ein Innenrohr als Innenteil, und ein Außenrohr mit dazwischen liegender, insbesondere einvulkanisierter, Elastomerschicht aufweist, wobei die Elastomer-Metall-Buchse unter Reduzierung ihres Außendurchmessers in Verbindung mit dem Aufbau einer Vorspannung in der Elastomerschicht in ein zylindrisches Aufnahmeauge eingepresst ist.

Das Aufnahmeauge ist, vorzugsweise integraler, Bestandteil des gabelschaftseitigen Vorbauteils und das lenkerseitige Vorbauteil weist ein Gabelteil, vorzugsweise mit einer endseitigen Lenkerklemme, auf, wobei das Gabelteil weiter zwei Gabelschenkel aufweist, die entsprechend der Länge des Innenteils der Elastomer-Metall-Buchse beabstandet sind und dieses umgreifen.

Weiter erfindungsgemäß ist vorgesehen, dass das Innenteil das Außenrohr mit beidseitigen, vorzugsweise kreisscheibenförmigen, Wangenteilen in der Länge überragt, wobei die Wangenteile relativ zu dem ortsfest eingepressten Außenrohr verdrehbar sind. Das Außenrohr weist zumindest eine, vorzugsweise randseitige, Ausnehmung als Ausnehmungssegment auf, wobei zumindest an einem Wangenteil eine der Ausnehmung zugeordnete und in diese eingreifende und achsparallel randseitig vom Wangenteil abragende Anschlagnase angeordnet ist. Die Anschlagnase ist in Verdrehrichtung kleiner als die Ausnehmung und liegt in einem Grund- oder Ausgangszustand, das heißt bei nicht oder gering belastetem Lenker, an einer Ausnehmungskante an und ist bei zunehmender Lenkerbelastung mit steigender Rückstellkraft bis zur als Begrenzungskante ausgebildeten gegenüberliegenden Ausnehmungskante und Federwegbegrenzung der Drehfeder bewegbar.

Mit einer so aufgebauten Vorbaufederung werden bei einer Fahrt auftretende, vertikale, insbesondere fahrbahnangeregte Stoßbelastungen auf einen Lenker federnd in der Elastomer-Metall-Buchse durch Verdrehung molekular und rückstellend in der Elastomerschicht aufgenommen. Damit wird der Fahrtkomfort erhöht bei einem stabilen und sicheren Fahrverhalten. Letzteres gelingt insbesondere auch durch die eine Art Distanzringe ausbildenden Wangenteile, die die Kardanik des Lenkers, insbesondere bei wechselnden Belastungen, einschränken. Die Anordnung ist, praktisch wartungsfrei und kostengünstig herstellbar, bei verschiedenen Fahrrädern einsetzbar und fügt sich bei relativ geringem Gewicht harmonisch in das Erscheinungsbild eines Fahrrads ein. Die Ausgestaltung mit einer Anschlagnase ist konstruktiv einfach und der Federweg wird sowohl beim Einfedern als auch beim Ausfedern bei sehr starken Stoßbelastungen auf den Lenkern begrenzt, was, wie bereits ausgeführt, zur Fahrsicherheit insbesondere bei Extrembelastungen beiträgt und andererseits die Möglichkeit einer relativ weichen komfortablen Federung für Fahrten bei geringen Stoßbelastungen auf den Lenkern ergibt.

Es versteht sich, dass auch die kinematische Umkehr, bei der das Außenrohr zumindest eine, vorzugsweise randseitige, Anschlagnase aufweist, wobei zumindest an einem Wangenteil eine der Anschlagnase zugeordnete Ausnehmung als Ausnehmungssegment, in die die Anschlagnase eingreift, selbstverständlich ausdrücklich vom Schutzumfang umfasst ist.

Für eine ausgewogene gleichmäßige Kraftaufnahme in der Federwegbegrenzung soll das Außenrohr mehrere Ausnehmungen aufweisen, vorzugsweise vier Ausnehmungen, die, vorzugsweise in gleichen Abständen, am Umfang versetzt und spiegelbildlich an beiden gegenüberliegenden Außenrohrrändern angeordnet sind. Zudem sind entsprechend zugeordnete Anschlagnasen an den Wangenteilen angeordnet.

Zur Ausbildung einer formschlüssigen und/oder kraftschlüssigen Verbindung zwischen den Gabelschenkeln und dem Innenteil und/oder zwischen dem Innenteil und den Wangenteilen kann das Innenteil als Innenrohr, bevorzugt als Mehrkantrohr, ausgebildet sein. Dabei kann das Innenteil auch dergestalt zweiteilig ausgebildet sein, dass in ein durchgehendes Zylinderrohr ein Mehrkantrohr verdrehfest eingepresst ist.

Die beidseitigen Wangenteile am vorzugsweise als Innenrohr ausgebildeten Innenteil können mit dem Innenteil grundsätzlich einteilig hergestellt werden. Der Vulkanisiervorgang wird dadurch aber relativ kompliziert und aufwändig. Sofern dies vermieden werden soll, wird daher in einer Weiterbildung vorgeschlagen, dass die Wangenteile jeweils separate Bauteile, vorzugsweise kreisscheibenartig ausgebildete separate Bauteile, sind, die jeweils seitlich, vorzugsweise mit einer Aussparung, auf das Innenteil aufgesteckt und mit diesem verdrehfest verbunden sind, insbesondere nach einem Vulkanisierprozess der Elastomer-Metall-Buchse.

Diese verdrehfeste Verbindung kann einfach dadurch hergestellt werden, dass die Aussparungen in den Wangenteilen jeweils Mehreckaussparungen, vorzugsweise zentrale Mehreckaussparungen, sind, mit denen die Wangenteile auf einen entsprechend zugeordneten mehrkantig ausgebildeten Bereich des Innenteils, vorzugsweise auf ein als Mehrkantrohr ausgebildetes Innenteil, formschlüssig und verdrehfest aufgesteckt sind. Dadurch ist auf einfache Weise sichergestellt, dass sich die Wangenteile beim Kontakt/Anschlag am Außenrohr nicht auf dem Innenteil verdrehen.

Für eine technisch einfach zu realisierende Relativverdrehung zwischen dem ortsfest eingepressten Außenrohr und den Wangenteilen, weisen die Wangenteile einen Freigang gegenüber dem Aufnahmeauge und der Länge des Außenrohrs auf. Weiter ist es vorteilhaft, wenn die Wangenteile optional jeweils zumindest in einem radial äußeren Randbereich einen Durchmesser entsprechend dem Außendurchmesser des eingepressten Außenrohrs aufweisen.

Weiter ist es besonders vorteilhaft, wenn zwischen den Gabelschenkeln und dem Innenteil und/oder den Wangenteilen eine verdrehfeste, vorzugsweise formschlüssige und/oder kraftschlüssige, Verbindung hergestellt ist. Für diese verdrehfeste Verbindung zwischen den Gabelschenkeln und dem als Innenrohr ausgebildeten Innenteil übergreifen die Gabelschenkel die Wangenteile und liegen an den Wangenteilen an. Mit einer Spannverschraubung durch Ausnehmungen an den Endbereichen der Gabelschenkel und durch das Innenrohr hindurch sind die Gabelschenkel kraftschlüssig durch einen Reibschluss mit den Wangenteilen und damit mit dem Innenrohr verdrehfest verbunden. Aufgrund der kraftschlüssigen Verbindung kann hier beispielsweise der Winkel zwischen den Gabelschenkeln und dem Innenteil, das heißt die Höheneinstellung des Lenkervorbaus kontinuierlich variiert werden.

In einer Weiterbildung weist die Spannverschraubung beidseitige Stützscheiben auf, die einen Mehrkantfortsatz aufweisen, der formschlüssig und verdrehfest in das entsprechend als Mehrkantrohr ausgebildete Innenrohr eingreift. Durch die Stützscheiben und das Innenrohr ist ein Schraubenbolzen der Spannverschraubung geführt, wobei bevorzugt vorgesehen ist, dass eine der Stützscheiben als Mutterteil der Spannverschraubung ausgebildet ist. Durch die formschlüssige Anbringung der beidseitigen Stützscheiben verdrehen sich diese vorteilhaft nicht beim Anziehen der Spannverschraubung.

Die Stützscheiben mit dem Mehrkantfortsatz lassen sich alternativ oder zusätzlich zu einer möglichen kraftschlüssigen Anbindung der Gabelschenkel verwenden, indem in den Gabelschenkeln eine Mehrkantausnehmung vorgesehen ist, durch die jeweils ein Mehrkantfortsatz der beidseitigen Stützscheiben für eine formschlüssige Verbindung geführt ist.

Zudem kann alternativ oder optional für eine Winkel- bzw. Höhenverstellung des lenkerseitigen Vorbauteils eine Formschlussverbindung zwischen wenigstens einer der Stützscheiben und dem jeweils zugeordneten Gabelschenkel vorgesehen sein. Dies kann zum Beispiel ebenfalls wiederum durch eine Mehrkantgeometrie realisiert werden, um nur ein Beispiel zu nennen.

Eine funktionale und optisch ansprechende Ausbildung des gabelschaftseitigen Vorbauteils weist einen im verbauten Zustand vertikalen Vorbaubereich auf, in dem integral eine Vorbauklemme zur Befestigung am oberen Ende des Gabelschafts angeordnet ist. Der vertikale Vorbaubereich biegt oder knickt, in Fahrtrichtung gesehen, nach vorne zu einem Aufnahmeaugebereich ab, in dem das zylindrische Aufnahmeauge mit horizontaler Querachse angeordnet ist.

Als optische Ergänzung ist ein zweiteiliges, den vertikalen Vorbaubereich umfassendes und die Vorbauklemme mit ihren Klemmschrauben abdeckendes Abdeckteil vorgesehen.

Besonders vorteilshaft kann als Elastomer-Metall-Buchse eine Schlitzbuchse verwendet werden, die im Herstellzustand einen Längsschlitz im Außenrohr und einen V-förmig durchgehenden, zugeordneten Längsschlitz in der Elastomerschicht, gegebenenfalls auch durchgehend durch ein Zwischenblech in der Elastomerschicht, aufweist. Eine solche Elastomer-Metall-Buchse weist im Herstellzustand einen größeren Außendurchmesser als der Innendurchmesser des Aufnahmeauges auf und die Elastomer-Metall-Buchse wird unter Reduzierung ihres Außendurchmessers und Schließung des Längsschlitzes sowie unter Aufbau einer Vorspannung in der Elastomerschicht in das Aufnahmeauge eingepresst.

Alternativ kann anstelle einer Schlitzbuchse als Elastomer-Metall-Buchse eine kalibrierbare Elastomer-Metall-Buchse mit geschlossenem Außenrohr und im Herstellzustand größerem Außendurchmesser als der Innendurchmesser des Aufnahmeauges verwendet werden. Auch diese Elastomer-Metall-Buchse wird unter Reduzierung ihres Außendurchmessers und dem Aufbau einer Vorspannung in der Elastomerschicht in das Aufnahmeauge eingepresst.

Zudem wird ein Fahrrad mit einem Lenkervorbau mit einer Vorbaufederung beansprucht, wie sie vorstehend ausführlich beschrieben worden ist.

Anhand einer Zeichnung wird die Erfindung beispielhaft weiter erläutert. Es zeigen:
- Figur 1: eine perspektivische Draufsicht von oben auf einen vorderen oberen Rahmenbereich eines Fahrrads mit einem Lenkervorbau,
- Figur 2: eine Explosionsdarstellung des Lenkervorbaus,
- Figur 3: ein gabelschaftseitiges Lenkervorbauteil mit teilweise geschnittenem Aufnahmeauge und einer eingepressten Elastomer-Metall-Buchse und
- Figur 4: einen Schnitt entlang der Linie A-A nach Figur 3 zusammen mit einem lenkerseitigen Vorbauteil.

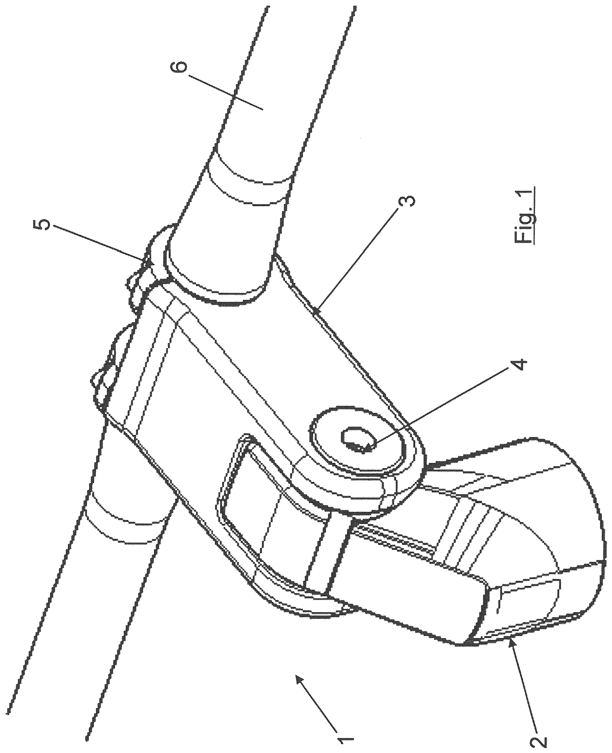

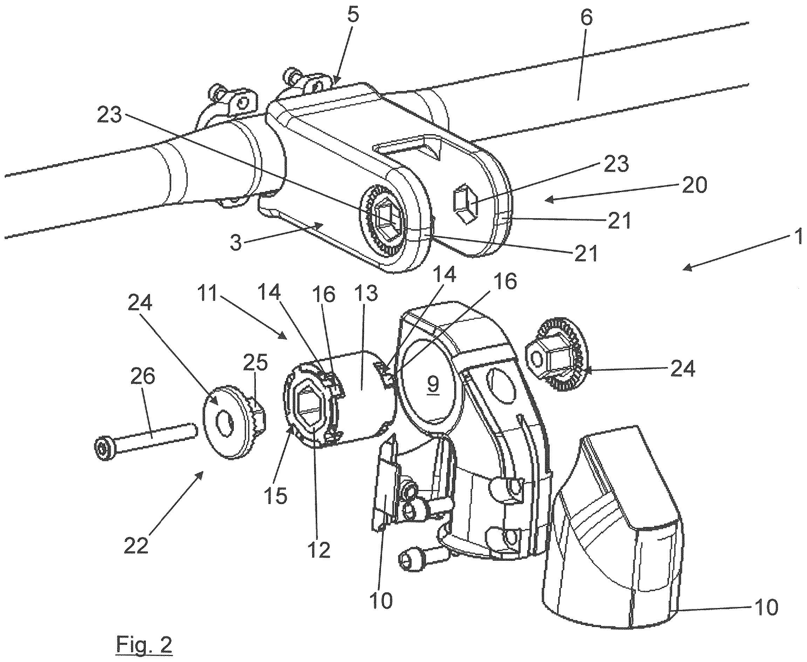

In Figur 1 ist einer perspektivischen Draufsicht ein Lenkervorbau 1 mit einer Vorbaufederung an einem Fahrrad dargestellt, wobei der Lenkervorbau 1 zweiteilig ausgeführt ist mit einem gabelschaftseitigen Vorbauteil 2 und einem lenkerseitigen Vorbauteil 3. Die beiden Vorbauteile 2 und 3 sind mittels einer Drehfeder 4 schwenkbar verbunden, wie dies in Verbindung mit den weiteren Figuren noch weiter erläutert wird. Am lenkerseitigen Vorbauteil 3 ist endseitig mittels einer Lenkerklemme 5 ein (teilweise gezeigter) Lenker 6 befestigt. Der konkrete Aufbau des Lenkervorbaus 1 wird anhand der Explosionsdarstellung nach Figur 2 und den Figuren 3 und 4 näher erläutert.

Das gabelschaftseitige Vorbauteil 2 weist einen im verbauten Zustand vertikalen Vorbaubereich auf, in dem integral eine Vorbauklemme 7 zur Befestigung an einem oberen Ende des Gabelschafts 8 angeordnet ist. Der vertikale Vorbauteilbereich biegt nach vorne oben bogenförmig zu einem Aufnahmebereich ab, in dem ein zylindrisches Aufnahmeauge 9 mit horizontaler Querachse angeordnet ist. Im fertig montierten Zustand ist ein zweiteiliges, den vertikalen Vorbaubereich umfassendes und die Vorbauklemme 7 mit ihren Klemmschrauben abdeckendes Abdeckteil 10 vorgesehen.

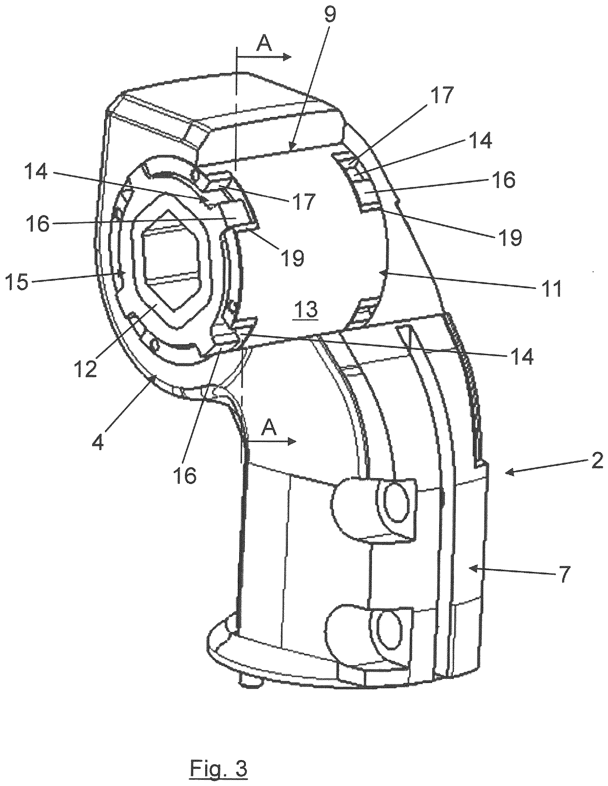

In das Aufnahmeauge 9 ist eine Elastomer-Metall-Buchse 11, insbesondere eine Schlitzbuchse, verdrehfest eingepresst, die die Funktion einer federwegbegrenzenden Drehfeder 4 aufweist. Die Elastomer-Metall-Buchse 11 weist ein formstabiles Innenteil, hier beispielhaft als Mehrkantrohr 12 ausgebildet, sowie ein Außenrohr 13 mit dazwischen einvulkanisierter Elastomerschicht auf. Das Außenrohr 13 weist hier lediglich beispielhaft vier randseitige Ausnehmungen 14 auf, die in gleichen Abständen am Umfang versetzt und spiegelbildlich an beiden gegenüberliegenden Außenrohrrändern angeordnet sind (in Figur 3 ist beispielhaft nur eine Ausnehmung 14 zusammen mit einer gegenüberliegenden Ausnehmung 14 dargestellt).

Das innere Mehrkantrohr 12 überragt mit beidseitigen Wangenteilen 15 das Außenrohr 13, wobei die Wangenteile 15 vorzugsweise einen Durchmesser entsprechend dem Außenrohrdurchmesser aufweisen, jedoch mit einem Freigang gegenüber dem Aufnahmeauge 9 und der Länge des Außenrohrs 13 zum Zwecke einer ungehinderten Relativverdrehung zwischen dem ortsfest eingepressten Außenrohr 13 und den Wangenteilen 15.

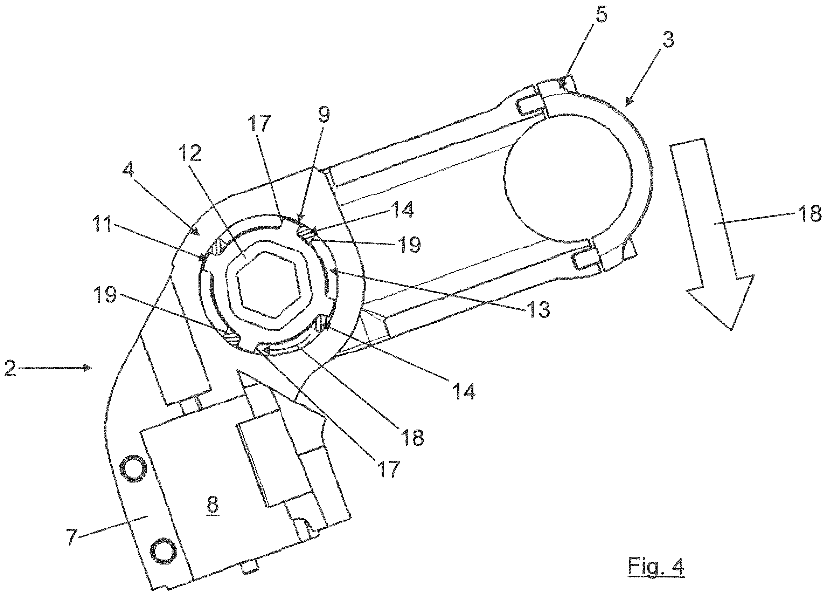

Die Wangenteile 15 sind im hier gezeigten Beispielfall mit einer zentralen Mehreckaussparung auf die beiden Endbereiche des Mehrkantrohrs 12 aufgesteckt und damit mit dem Mehrkantrohr 12 verdrehfest verbunden. An den Wangenteilen 15 sind hier, ebenfalls wieder nur beispielhaft, vier achsparallel nach innen weisende Anschlagnasen 16 angeformt, die in die jeweils zugeordneten Ausnehmungen 14 des Außenrohrs 13 eingreifen. Im unbelasteten Zustand der Elastomer-Metall-Buchse 11 als Drehfeder 4 liegen die Anschlagnasen 16 jeweils an einer ersten Ausnehmungskante 17 der Ausnehmungen 14 an. Bei einer Verdrehbelastung der Elastomer-Metall-Buchse 11 durch eine Lenkereinfederung bewegen sich die Anschlagnasen 16 in den Ausnehmungen 14 (siehe Pfeile 18 in Figur 4) mit steigender Rückstellkraft in Richtung auf eine Begrenzungskante 19 zu, die durch eine zweite Ausnehmungskante der Ausnehmungen 14 gebildet ist, die der ersten Ausnehmungskante 17, bezogen auf die jeweilige Ausnehmung 14, gegenüberliegt. Bei sehr starker Belastung erfolgt eine Federwegbegrenzung, in dem die Anschlagnasen 16 an den Begrenzungskanten 19 zur Anlage kommen.

Die Ausbildung der Elastomer-Metall-Buchse 11 und der Wangenteile 15 in Verbindung mit der Anschlagbegrenzung ist aus Figur 3 und Figur 4 detailliert ersichtlich. Die verdrehfeste Anbindung des lenkerseitigen Vorbauteils 3 mit dem Mehrkantrohr 12 als Innenteil der Elastomer-Metall-Buchse 11 ist detailliert aus Figur 2 zu entnehmen.

Das lenkerseitige Vorbauteil 3 weist gegenüberliegend zur Lenkerklemme 5 ein Gabelteil 20 mit zwei Gabelschenkeln 21 auf, die im montierten Zustand die Elastomer-Metall-Buchse 11 umgreifen, wobei zwischen den Gabelschenkeln 21 und dem Mehrkantrohr 12 und/oder den Wangenteilen 15 eine verdrehfeste formschlüssige und/oder kraftschlüssige Verbindung hergestellt ist.

Diese Verbindung wird mittels einer Spannverschraubung 22 durch Ausnehmungen 23 an den Endbereichen der Gabelschenkel 21 und durch das Mehrkantrohr 12 hindurch hergestellt, so dass durch einen Form- und/oder Reibschluss mit den Wangenteilen 15 und damit mit dem inneren Mehrkantrohr 12 eine verdrehfeste Verbindung hergestellt ist.

Damit ist eine kontinuierliche Winkelverstellung zwischen dem gabelschaftseitigen Vorbauteil 2 und dem lenkerseitigen Vorbauteil 3 möglich.

Die Spannverschraubung 22 weist im Ausführungsbeispiel zudem beidseitige Stützscheiben 24 auf, die einen Mehrkantfortsatz 25 aufweisen, der formschlüssig und verdrehfest in das innere Mehrkantrohr 12 eingreift.

Zudem kann für eine Winkel- bzw. Höhenverstellung des lenkerseitigen Vorbauteils 3 eine Formschlussverbindung zwischen den Stützscheiben 24 und den diesen jeweils zugeordneten Gabelschenkeln 21 vorgesehen sein.

### Bezugszeichenliste

| | | | |
|---|---|---|---|
| 1 | Lenkervorbau | 25 | Mehrkantfortsatz |
| 2 | gabelschaftseitiges Vorbauteil | 26 | Schraubenbolzen |
| 3 | lenkerseitiges Vorbauteil | | |
| 4 | Drehfeder | | |
| 5 | Lenkerklemme | | |
| 6 | Lenker | | |
| 7 | Vorbauklemme | | |
| 8 | Gabelschaft | | |
| 9 | Aufnahmeauge | | |
| 10 | Abdeckteil | | |
| 11 | Elastomer-Metall-Buchse | | |
| 12 | Innenteil/Mehrkantrohr | | |
| 13 | Außenrohr | | |
| 14 | Ausnehmung | | |
| 15 | Wangenteil | | |
| 16 | Anschlagnasen | | |
| 17 | Ausnehmungskante | | |
| 18 | Pfeil | | |
| 19 | Begrenzungskante | | |
| 20 | Gabelteil | | |
| 21 | Gabelschenkel | | |
| 22 | Spannverschraubung | | |
| 23 | Ausnehmung | | |
| 24 | Stützscheibe | | |

## Patentansprüche

1. Lenkervorbau (1) mit einer Vorbaufederung für ein Fahrrad,
wobei der Lenkervorbau (1), der im montierten Zustand mit einem Gabelschaft (8) verbunden ist und in Fahrtrichtung nach vorne abragt, ein gabelschaftseitiges Vorbauteil (2) und ein lenkerseitiges Vorbauteil (3) aufweist, an dem ein Lenker (6) befestigbar ist,
wobei das gabelschaftseitige Vorbauteil (2) und das lenkerseitige Vorbauteil (3) mittels eines Schwenklagers mit in Querrichtung liegender Schwenkachse schwenkbar verbunden sind,
**dadurch gekennzeichnet,**
- **dass** das Schwenklager durch eine Elastomer-Metall-Buchse (11) gebildet ist, die eine Drehfeder (4) ausbildet und ein Innenteil (12), vorzugsweise ein Innenrohr als Innenteil (12), und ein Außenrohr (13) mit dazwischen liegender, insbesondere einvulkanisierter, Elastomerschicht aufweist, wobei die Elastomer-Metall-Buchse (11) unter Reduzierung ihres Außendurchmessers in Verbindung mit dem Aufbau einer Vorspannung in der Elastomerschicht in ein zylindrisches Aufnahmeauge (9) eingepresst ist,
- **dass** das Aufnahmeauge (9), vorzugsweise integraler, Bestandteil des gabelschaftseitigen Vorbauteils (2) ist,
- **dass** das lenkerseitige Vorbauteil (3) ein Gabelteil (20), vorzugsweise mit einer endseitigen Lenkerklemme (5), aufweist, wobei das Gabelteil (20) zwei Gabelschenkel (21) aufweist, die entsprechend der Länge des Innenteils (12) der Elastomer-Metall-Buchse (11) beabstandet sind und dieses umgreifen,
- **dass** das Innenteil (12) mit beidseitigen Wangenteilen (15) das Außenrohr (13) in der Länge überragt, wobei die Wangenteile (15) relativ zu dem ortsfest eingepressten Außenrohr (13) verdrehbar sind,
- **dass** das Außenrohr (13) zumindest eine, vorzugsweise randseitige, Ausnehmung (14) als Ausnehmungssegment aufweist und zumindest an einem Wangenteil (15) eine der Ausnehmung (14) zugeordnete und in diese eingreifende und achsparallel randseitig vom Wangenteil (15) abragende Anschlagnase (16) angeordnet ist, wobei die Anschlagnase (16) in Verdrehrichtung kleiner als die Ausnehmung (14) ist und in einem Grund- oder Ausgangszustand, vorzugsweise bei nicht oder gering belastetem Lenker (6), an einer Ausnehmungskante (17) anliegt und bei zunehmender Lenkerbelastung mit steigender Rückstellkraft bis zur als Begrenzungskante (19) ausgebildeten gegenüberliegenden Ausnehmungskante und Federwegbegrenzung der Drehfeder (4) bewegbar ist.

2. Lenkervorbau nach Anspruch 1, **dadurch gekennzeichnet,**
**dass** das Außenrohr (13) mehrere Ausnehmungen (14) aufweist, die, vorzugsweise in gleichen Abständen, am Umfang versetzt und spiegelbildlich an beiden gegenüberliegenden Außenrohrrändern angeordnet sind, und
**dass** entsprechend zugeordnete Anschlagnasen (16) an den Wangenteilen (15) angeordnet sind.

3. Lenkervorbau nach Anspruch 1 oder 2, **dadurch gekennzeichnet, dass** das Innenteil (12) als Innenrohr, bevorzugt als Mehrkantrohr, ausgebildet ist.

4. Lenkervorbau nach Anspruch 3, **dadurch gekennzeichnet,**
**dass** das Innenteil (12) zweiteilig ausgebildet ist und ein durchgehendes Zylinderinnenrohr aufweist, in das ein Mehrkantrohr (12) verdrehfest eingepresst ist.

5. Lenkervorbau nach einem der vorhergehenden Ansprüche, **dadurch gekennzeichnet,**
**dass** die Wangenteile (15) jeweils durch separate Bauteile, vorzugsweise durch kreisscheibenartig ausgebildete Bauteile, gebildet sind, die jeweils seitlich, vorzugsweise mit einer Aussparung, auf das Innenteil (12) aufgesteckt und mit diesem verdrehfest verbunden sind.

6. Lenkervorbau nach Anspruch 5, **dadurch gekennzeichnet,**
**dass** die Aussparungen in den Wangenteilen (15) jeweils, vorzugsweise zentrale, Mehreckaussparungen sind, mit denen die Wangenteile (15) auf einen entsprechend zugeordneten mehrkantig ausgebildeten Bereich des Innenteils (12), vorzugsweise auf ein als Mehrkantrohr ausgebildetes Innenteil (12), formschlüssig und verdrehfest aufgesteckt sind.

7. Lenkervorbau nach einem der vorhergehenden Ansprüche, **dadurch gekennzeichnet,**
**dass** die Wangenteile (15), die vorzugsweise jeweils zumindest in einem radial äußeren Randbereich einen Durchmesser entsprechend dem Außendurchmesser des eingepressten Außenrohrs (13) aufweisen, einen Freigang gegenüber dem Aufnahmeauge (9) und der Länge des Außenrohrs (13) für eine Relativverdrehung zwischen dem ortsfest eingepressten Außenrohr (13) und den Wangenteilen (15) aufweisen.

8. Lenkervorbau nach einem der vorhergehenden Ansprüche, **dadurch gekennzeichnet,**
**dass** zwischen den Gabelschenkeln (21) und dem Innenteil (12) und/oder den Wangenteilen (15) eine verdrehfeste, vorzugsweise formschlüssige und/oder kraftschlüssige, Verbindung hergestellt ist.

9. Lenkervorbau nach Anspruch 8, **dadurch gekennzeichnet,**
**dass** die Gabelschenkel (21) die Wangenteile (15) für die verdrehfeste Verbindung zwischen den Gabelschenkeln (21) und dem als Innenrohr (12) ausgebildeten Innenteil übergreifen und an den Wangenteilen (15) anliegen, und
**dass** die Gabelschenkel (21) mit einer Spannverschraubung (22) durch Ausnehmungen an den Endbereichen der Gabelschenkel (21) und durch das Innenrohr (12) hindurch kraftschlüssig durch einen Reibschluss mit den Wangenteilen (15) und damit mit dem Innenrohr (12) verdrehfest verbunden sind.

10. Lenkervorbau nach Anspruch 9, **dadurch gekennzeichnet,**
**dass** die Spannverschraubung (22) beidseitige Stützscheiben (24) aufweist, die einen Mehrkantfortsatz (25) aufweisen, der formschlüssig und verdrehfest in das entsprechend als Mehrkantrohr ausgebildete Innenrohr (12), eingreift, und
**dass** durch die Stützscheibe (24) und das Innenrohr (12) ein Schraubenbolzen (26) der Spannverschraubung geführt ist, wobei bevorzugt vorgesehen ist, dass eine der Stützscheiben (24) als Mutterteil der Spannverschraubung ausgebildet ist.

11. Lenkervorbau nach einem der Anspruch 10, **dadurch gekennzeichnet, dass** in den Gabelschenkeln (21) jeweils eine Mehrkantausnehmung vorgesehen ist, durch die jeweils ein Mehrkantfortsatz der beidseitigen Stützscheiben (24) für eine formschlüssige Verbindung geführt ist.

12. Lenkervorbau nach Anspruch 10 oder 11, **dadurch gekennzeichnet, dass**, insbesondere für eine Winkel- bzw. Höhenverstellung des lenkerseitigen Vorbauteils (3), eine Formschlussverbindung zwischen wenigstens einer der Stützscheiben (24) und dem jeweils zugeordneten Gabelschenkel (21) vorgesehen ist.

13. Lenkervorbau nach einem der vorhergehenden Ansprüche, **dadurch gekennzeichnet,**
**dass** das gabelschaftseitige Vorbauteil (2) einen im verbauten Zustand vertikalen Vorbaubereich aufweist, in dem integral eine Vorbauklemme (7) zur Befestigung am oberen Ende des Gabelschafts (8) angeordnet ist, und
**dass** der vertikale Vorbaubereich, in Fahrtrichtung gesehen nach vorne zu einem Aufnahmeaugebereich hin abbiegt oder abknickt, in dem das zylindrische Aufnahmeauge (9) mit horizontaler Querachse angeordnet ist.

14. Lenkervorbau nach Anspruch 13, **dadurch gekennzeichnet,**
**dass** ein zweiteiliges, den vertikalen Vorbaubereich umfassendes und die Vorbauklemme (7) mit ihren Klemmschrauben abdeckendes Abdeckteil (10) vorgesehen ist.

15. Lenkervorbau nach einem der vorhergehenden Ansprüche, **dadurch gekennzeichnet,**
**dass** als Elastomer-Metall-Buchse eine Schlitzbuchse verwendet ist, die im Herstellzustand einen Längsschlitz im Außenrohr und einen V-förmig durchgehenden, zugeordneten Längsschlitz in der Elastomerschicht, gegebenenfalls auch durchgehend durch ein Zwischenblech in der Elastomerschicht, aufweist,
**dass** die Elastomer-Metall-Buchse im Herstellzustand einen größeren Außendurchmesser als der Innendurchmesser des Aufnahmeauges aufweist, und
**dass** die Elastomer-Metall-Buchse unter Reduzierung ihres Außendurchmessers und Schließung des Längsschlitzes sowie unter Aufbau einer Vorspannung in der Elastomerschicht in das Aufnahmeauge eingepresst ist.

16. Lenkervorbau nach einem der Ansprüche 1 bis 14, **dadurch gekennzeichnet,**
**dass** die Elastomer-Metall-Buchse eine kalibrierbare Elastomer-Metall-Buchse mit geschlossenem Außenrohr und im Herstellzustand größerem Außendurchmesser als der Innendurchmesser des Aufnahmeauges ist, und
**dass** die Elastomer-Metall-Buchse unter Reduzierung ihres Außendurchmessers und dem Aufbau einer Vorspannung in der Elastomerschicht in das Aufnahmeauge eingepresst ist.

17. Fahrrad mit einem Lenkervorbau (1) mit einer Vorbaufederung nach einem der vorhergehenden Ansprüche, insbesondere dergestalt, dass bei einer Fahrt auftretende vertikale, insbesondere fahrbahnangeregte, Stoßbelastungen auf einen Lenker (6) federnd in der Elastomer-Metall-Buchse (11) durch Verdrehung molekular und rückstellend in der Elastomerschicht aufgenommen werden.
